# EUROPÄISCHE PATENTSCHRIFT

(11) **EP 3 347 233 B1**
(45) Veröffentlichungstag und Bekanntmachung des Hinweises auf die Patenterteilung: **22.04.2020**
(21) Anmeldenummer: 16763050.8
(22) Anmeldetag: 09.09.2016
(51) Int. Cl.: B60N 2/28

(54) **KINDERSITZ ZUR ANBRINGUNG AUF EINEM KRAFTFAHRZEUGSITZ**
CHILD SEAT FOR ATTACHMENT ON A VEHICLE SEAT
SIÈGE ENFANT POUR FIXATION SUR SIÈGE DE VÉHICULE

(30) Priorität: 09.09.2015 DE 202015104791 U
(43) Veröffentlichungstag der Anmeldung: 18.07.2018
(60) Teilanmeldung: 19173486.2
(73) Patentinhaber: CYBEX GmbH, 95448 Bayreuth (DE)
(72) Erfinder: POS, Martin, 95444 Bayreuth (DE)
(74) Vertreter: Pfrang, Tilman
(86) Internationale Anmeldenummer: PCT/EP2016/071288
(87) Internationale Veröffentlichungsnummer: WO 2017/042326

(56) Entgegenhaltungen:
- EP-A1- 1 927 502
- EP-A2- 0 958 959
- WO-A1-2013/189819

## Beschreibung

Die Erfindung betrifft einen Kindersitz zur Anbringung auf einem Kraftfahrzeugsitz gemäß Anspruch 1.

In diesem Zusammenhang sei angemerkt, dass im Rahmen dieser Erfindung der Begriff "Kindersitz" als Oberbegriff für (klassische) Kindersitze und Babyschalen zu verstehen ist. Somit sind für einen Kindersitz vorgesehene Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

EP 0 958 959 A2 beschreibt einen Kindersitz mit Seitenwangen.

Kindersitze und Babyschalen, die auf einem Kraftfahrzeugsitz angebracht werden können, sind seit geraumer Zeit bekannt. Solche Kindersitze oder Babyschalen dienen als Sitzgelegenheit für Kleinkinder, Babys und Kinder und bieten diesen, insbesondere im Falle eines Unfalls, erhöhten Schutz. Die Befestigung derartiger Kindersitze kann mit dem Gurtsystem des Autos oder mittels Isofix-Klinken erfolgen. Eine derartige Befestigung sichert den Kindersitz im Falle eines Unfalls auf dem Kraftfahrzeugsitz, so dass dieser, insbesondere bei einem Auffahrunfall (Aufprall), auf dem Kraftfahrzeugsitz gehalten und nicht nach vorne geschleudert wird. Als problematisch haben sich diese Sitze jedoch bei einem Seitenaufprall erwiesen, da sowohl eine Gurtbefestigung als auch eine Befestigung mittels Isofix-Klinken den Kindersitz oder die Babyschale nur unzureichend gegen eine Seitwärts-Bewegung des Sitzes schützt. Aus diesem Grund ist es bekannt, den Kindersitz mit einem Seitenaufprallschutz auszustatten, wie beispielsweise in WO 2013/189819 A1 beschrieben. Bei diesem Kindersitz ist eine Sitzschale und ein an dieser aufgebrachter Seitenaufprallschutz vorgesehen, der von einer Ruhestellung in eine Funktionsstellung gebracht werden kann, wobei der Seitenaufprallschutz so positioniert ist, dass er etwaige Seitenkräfte hinter dem Rücken eines im Kindersitz sitzenden Kindes vorbei überträgt und in die Sitzschale einleitet.

Durch einen derartigen Seitenaufprallschutz wird die Sicherheit erhöht. Die Absicherung gegen die Folgen eines Seitenaufpralls wird jedoch als weiter verbesserungswürdig angesehen.

Es ist daher Aufgabe der Erfindung einen Seitenaufprallschutz aufzuzeigen, der sich durch eine verbesserte Absicherung gegenüber einem Seitenaufprall auszeichnet, insbesondere die Bedienbarkeit und Einstellung einer Funktionsstellung des Seitenaufprallschutzes vereinfacht.

Diese Aufgabe wird durch einen Kindersitz gemäß Anspruch 1 gelöst.

Insbesondere wird diese Aufgabe durch einen Kindersitz zur Anbringung auf einem Kraftfahrzeugsitz mit einem Sitzelement, insbesondere einer Sitzschale, und einem Seitenaufprallschutz mit einem Klappelement gelöst, der von einer innerhalb einer vorgegebenen Breite, insbesondere Standardbreite, gelegenen Ruhestellung in eine außerhalb der vorgegebenen Breite, insbesondere Standardbreite, gelegenen Funktionsstellung und umgekehrt bringbar ist, wobei der Kindersitz eine Stellungsüberführungseinrichtung aufweist, die derart ausgebildet ist, dass die Stellungsüberführungseinrichtung selbsttätig den Seitenaufprallschutz von seiner Ruhestellung oder einer Zwischenstellung zwischen Ruhe- und Funktionsstellung in seine Funktionsstellung überführt, wobei die Stellungsüberführungseinrichtung mindestens eine Feder umfasst, wobei das Klappelement in der Funktionsstellung so positioniert und gehalten ist, dass durch ein Ziehen am Klappelement, insbesondere an seinem distalen Ende, eine Arretierung in der Funktionsstellung aufgehoben werden kann, so dass eine Überführung in die Ruhestellung möglich ist. Bei der Standardbreite kann es sich um eine Breite von 440 mm gemäß dem AGREEMENT CONCERNING THE ADOPTION OF UNIFORMED TECHNICAL PRESCRIPTIONS FOR WHEELED VEHICLES, EQUIPEMENT AND PARTS WHICH CAN BE FITTED AND/OR BE USED ON WHEELED VEHICLES AND THE CONDITIONS FOR RECIPROCAL RECOGNITION OF APPROVALS GRANTED ON THE BASIS OF THESE PRESCRIPTIONS (Revision 2, including the amendments which entered into force on 16 October 1995), E/ECE/324, E/ECE/TRANS/505, Rev. 1/ADD.15/Rev. 6 vom 19. Mai 2009, Annex 17 - Appendix 2, handeln. Ein wesentlicher Punkt der Erfindung liegt darin, dass die Stellungsüberführungseinrichtung vorgesehen ist und eine selbsttätige (automatische) Überführung des Seitenaufprallschutzes in seine Funktionsstellung ermöglicht. Erfindungsgemäß wurde erkannt, dass aufgrund des Verbringens oder Überführens in die Funktionsstellung, was gemäß dem Stand der Technik per Hand erfolgt, eine Sicherheitslücke resultiert, beispielsweise wenn eine Arretierung nicht (richtig) ausgelöst oder durchgeführt wird oder nur eine Zwischenstellung zwischen Ruhe- und Funktionsstellung eingestellt wird. Dem Benutzer wird also die Aufgabe von der Stellungsüberführungseinrichtung abgenommen, den Seitenaufprallschutz in seine Funktionsstellung zu überführen. Insgesamt wird die Sicherheit erhöht.

Vorzugsweise ist ein Stützabschnitt einer Außenwand des Sitzelementes so ausgebildet, dass das Klappelement zumindest zeitweise während eines Aufklappens und/oder eines Einrastens von dem Stützabschnitt der Außenwand des Sitzelementes geführt wird. Alternativ oder zusätzlich kann das Klappelement in der Funktionsstellung (im aufgeklappten Zustand) in einem (dem) Stützabschnitt (haltend bzw. berührend) einer (der) Außenwand des Sitzelements aufgenommen sein.

Ein zentraler Aspekt der Erfindung ist also die Ausnutzung der Außenwand des Sitzelementes zum Überführen eines Klappelementes von seiner Ruhestellung in seine Funktionsstellung bzw. zur (rastenden) Aufnahme (Halterung) des Klappelementes in der Funktionsstellung. Dadurch wird die Struktur des Kindersitzes vereinfacht, was mögliche Fehlfunktionen unwahrscheinlicher macht. Insbesondere werden Fehlfunktionen, die bei der Verwendung eines Halteriegels, wie beispielsweise gemäß WO 2013/189819 A1 vorgeschlagen, vermieden.

Vorzugsweise ist eine Betätigungseinrichtung vorgesehen, die derart zum Zusammenwirken mit der Stellungsüberführungseinrichtung ausgebildet ist, dass die Stellungsüberführungseinrichtung selbsttätig den Seitenaufprallschutz von seiner Ruhestellung oder einer Zwischenstellung zwischen Ruhe- und Funktionsstellung überführt, wenn die Betätigungseinrichtung betätigt wird oder wurde. Dadurch wird die Bedienung weiter vereinfacht.

Unter einer "Zwischenstellung" soll insbesondere eine Stellung verstanden werden, bei der der Seitenaufprallschutz nur zum Teil von der Ruhestellung in die Funktionsstellung überführt wird, beispielsweise nur teilweise aufgeklappt ist (z.B. um einen Winkel, der 10-80%, weiter vorzugsweise 10-60% des gesamten Aufklappwinkels entspricht oder beispielsweise nur teilweise, insbesondere teleskopartig, ausgefahren ist, beispielsweise um 10-90%, insbesondere 10-60% des gesamten Ausfahrweges). Im Allgemeinen kann eine Zwischenstellung dann vorliegen, wenn ein distales Ende des Seitenaufprallschutzes 10-90%, vorzugsweise 10-60% seines Weges in seitlicher Richtung bei der Überführung zwischen Ruhe- in die Funktionsstellung zurückgelegt hat.

Grundsätzlich kann der Seitenaufprallschutz (zumindest abschnittsweise) zur Überführung in die Funktionsstellung ausklappbar, ausschwenkbar, teleskopartig ausfahr- und/oder ausschieb- und/oder ausziehbar sein.

Vorzugsweise handelt es sich bei der Betätigungseinrichtung um einen Betätigungsknopf, insbesondere Druckknopf und/oder Schieberknopf. Dadurch wird die Bedienbarkeit weiter vereinfacht und damit die Sicherheit erhöht.

In konkreten Ausführungsformen kann/können das Klappelement und/oder die Betätigungseinrichtung in die Außenwand des Sitzelementes eingebettet sein. Alternativ ist auch eine seitliche Anbringung mit einem Überstand gegenüber der angrenzenden Fläche der Außenwand des Sitzelementes möglich. Insbesondere kann/können das Klappelement und/oder die Betätigungseinrichtung in die Außenwand des Sitzelementes eingeklappt sein. Auf diese Weise kann gewährleistet werden, dass der Kindersitz durch den vorgesehenen Seitenaufprallschutz in der Ruhestellung nicht über eine vorgegebene Breite, insbesondere Standardbreite, respektive Hüllkurve des Kindersitzes hinausragt und bei angelegtem Klappelement eine übliche Breite eines Kindersitzes nicht übersteigt, was die Handhabbarkeit des Kindersitzes zusätzlich begünstigt. Vorzugsweise ist das Klappelement auch in der Funktionsstellung teilweise in der Außenwand des Sitzelementes eingebettet, so dass nur ein Abschnitt des Klappelementes über die Außenwand vorragt. Vorzugsweise ragt das Klappelement in der Funktionsstellung um mindestens 50%, weiter vorzugsweise mindestens 70%, jedoch höchstens 90, vorzugsweise 80% seiner Länge über die Außenwand des Sitzelementes vor.

In einer konkreten Ausführungsform umfasst die Stellungsüberführungseinrichtung mindestens eine Zugfeder. Alternativ oder zusätzlich kann ein (der) Stützabschnitt der Außenwand des Sitzelementes Bestandteil der Stellungsüberführungseinrichtung sein. Weiterhin kann ein Langloch zur (gleitenden) Aufnahme einer Rotationsachse, vorzugsweise im Klappelement, vorgesehen sein. Durch eine Feder kann auf einfache Weise eine Kraft bereitgestellt werden, die den Seitenaufprallschutz in seine Funktionsstellung drängt. Werden Abschnitte der Außenwand des Sitzelementes als Bestandteil der Sitzübertragungseinrichtung verwendet, vereinfacht sich dadurch die gesamte Konstruktion, was auch die Sicherheit verbessert. Ein Langloch zur (gleitenden) Aufnahme einer Rotationsachse (die beispielsweise ortsfest an dem Sitzelement angebracht ist) ermöglicht es auf einfache Art und Weise, das Klappelement gleichzeitig zu rotieren und in seine Funktionsstellung zu überführen (in der es insbesondere arretiert ist). Im Allgemeinen erlaubt ein derartiges Langloch also eine gleichzeitige Rotation und translatorische Verschiebung des Klappelementes. Insgesamt wird die Handhabung weiter vereinfacht.

Vorzugsweise ist ein proximales Ende des Klappelementes in der Funktionsstellung in einem Halteabschnitt (Halteaufnahme) der Außenwand des Sitzelementes, insbesondere rastend gehalten. Eine Halte- bzw. Rastfunktion wird also durch das Klappelement selbst in Zusammenwirken mit der ohnehin vorgesehenen Außenwand des Sitzelementes ermöglicht.

Vorzugsweise weist der Stützabschnitt einen Führungsabschnitt auf, der so ausgebildet ist, dass ein (das) proximale Ende des Klappelementes zumindest zeitweise (während des Aufklappens) an dem Führungsabschnitt zwangsgeführt ist. Insbesondere ist der Führungsabschnitt so ausgeformt, dass über eine Federkraft (oder sonstige Druck- oder Zugkraft) das proximale Ende während des Ausklappens an dem Führungsabschnitt angedrückt wird und somit an dem Führungsabschnitt entlanggleiten kann. Dadurch wird einerseits eine definierte Klappbewegung ermöglicht und andererseits eine gewisse Abstützung auch während des Klappens bereitgestellt, was die Stabilität der Gesamtkonstruktion verbessert. Insgesamt wird mit wenigen Bauteilen die Handhabung erleichtert, was implizit auch eine Verbesserung der Sicherheit bedeutet.

Eine proximale Endkante des Klappelementes kann zumindest abschnittsweise nach außen gewölbt (konvex) ausgebildet sein. Alternativ oder zusätzlich kann der Stützabschnitt und/oder der Führungsabschnitt und/oder der Halteabschnitt (Halteaufnahme) eine Ausnehmung und/oder eine (nach innen) gebogene (konkave) Aufnahme umfassen. Insgesamt wird durch eine derartige Ausformung von Klappelement bzw. dem Stützabschnitt oder Teilen des Stützabschnittes eine vereinfachte Führung und Halterung (Verrastung) des Klappelementes ermöglicht. Dadurch wird die Bedienung vereinfacht.

Der Halteabschnitt kann an dem Führungsabschnitt angrenzen. Vorzugsweise ist der Halteabschnitt gegenüber dem Führungsabschnitt abgeknickt. Dadurch liegt eine klar definierte Grenze zwischen Halteabschnitt und Führungsabschnitt vor, so dass das Klappelement einerseits einfach und effektiv geführt werden kann und dann (bei Überschreiten dieser Grenze) in den Halteabschnitt hineingleitet (und ggf. dort verrastet). Auch dadurch wird die Funktionalität des Kindersitzes, insbesondere dessen Handhabung und Bedienung vereinfacht.

Das Klappelement ist in der Funktionsstellung so positioniert und gehalten, dass (nur) durch ein Ziehen des Klappelementes (z.B. an einem distalen Ende desselben) eine Überführung in die Ruhestellung möglich ist, insbesondere eine Arretierung in der Funktionsstellung (nur) durch das Ziehen aufgehoben werden kann. Im Allgemeinen erfolgt die Überführung von Funktionsstellung in Ruhestellung nicht selbsttätig (kann jedoch ggf. auch selbsttätig erfolgen), sondern wird per Hand durchgeführt, wie im Stand der Technik auch hinsichtlich der Überführung von Ruhestellung in Funktionsstellung. Dadurch wird das Gesamtsystem weiter vereinfacht. Insbesondere wurde erkannt, dass es im umgekehrten Fall (der Überführung von Funktionsstellung in Ruhestellung) weniger sicherheitsrelevant ist, ob die Ruhestellung letztendlich vollständig erreicht wird oder eine Zwischenstellung vorliegt.

Vorzugsweise ist das Klappelement in der Funktionsstellung arretiert, insbesondere gegenüber einem (ungewollten) Einklappen (in die Ruhestellung). Dadurch wird die Sicherheit verbessert.

Das Klappelement, insbesondere ein Abschnitt, der in eine proximal-distale Richtung verläuft, kann gebogen ausgebildet sein. Durch eine gebogene Ausführung des Klappelementes kann dieses platzsparend in die Ruhestellung überführt werden und gleichzeitig effektiv gegen einen Seitenaufprall schützen. Das Klappelement kann in einem Querschnitt senkrecht auf die proximal-distale Richtung, zumindest abschnittsweise, bogenförmig sein. Vorzugsweise weist das Klappelement in einem Querschnitt senkrecht auf die proximal-distale Richtung eine (zumindest im Wesentlichen) flache Oberseite und eine gebogene Unterseite auf. Auch durch derartige Maßnahmen kann das Klappelement effektiv in die Außenwand des Sitzelementes eingebettet werden (was insgesamt eine platzsparende und dennoch effektive Konstruktion ermöglicht). Die proximal-distale Richtung ist durch eine Richtung definiert, die von einem proximalen Ende zu einem distalen Ende des Klappelementes verläuft.

Im Prinzip kann nur ein (Englisch: one) seitlich angebrachtes Seitenaufprallschutzelement bzw. Klappelement vorgesehen sein. Vorteilhafterweise sind jedoch an beiden Seiten des Kindersitzes entsprechende Seitenaufprallschutzelemente vorgesehen. Die (abgesehen von einer Spiegelung der jeweiligen Strukturen) identisch ausgebildet sein können. Es wäre auch denkbar, noch mehr als nur zwei Seitenaufprallschutzelemente (wie oben beschrieben) vorzusehen, beispielsweise je zwei auf beiden Seiten.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: einen Ausschnitt des erfindungsgemäßen Kindersitzes in einer schematischen Seitenansicht;
- Fig. 2: einen weiteren Ausschnitt des Kindersitzes gemäß Fig. 1;
- Fig. 3: einen weiteren Ausschnitt des Kindersitzes, wobei das Innere des Kindersitzes teilweise freigegeben ist;
- Fig. 4: einen Ausschnitt des Kindersitzes analog Fig. 3 mit teilweise ausgeklapptem Klappelement;
- Fig. 5: einen Ausschnitt des Kindersitzes analog Fig. 3 und 4 mit vollständig ausgeklapptem Klappelement;
- Fig. 6: einen Ausschnitt des Kindersitzes mit ausgeklapptem Klappelement in einer schematischen Seitenansicht;
- Fig. 7: einen Schnitt durch einen Abschnitt des Kindersitzes;
- Fig. 8: einen Schnitt analog Fig. 7 in einer zweiten Stellung eines Klappelementes;
- Fig. 9: einen Schnitt analog Fig. 7 und 8 in einer weiteren Stellung des Klappelementes;
- Fig. 10: einen Schnitt analog Fig. 7-9 in einer Funktionsstellung des Klappelementes;
- Fig. 11: einen Abschnitt des Kindersitzes, wobei die Sicht auf das Innere des Kindersitzes teilweise freigegeben ist; und
- Fig. 12: eine Seitenansicht des erfindungsgemäßen Kindersitzes.

In der nachfolgenden Beschreibung werden für gleiche und gleichwirkende Teile dieselben Bezugsziffern verwendet.

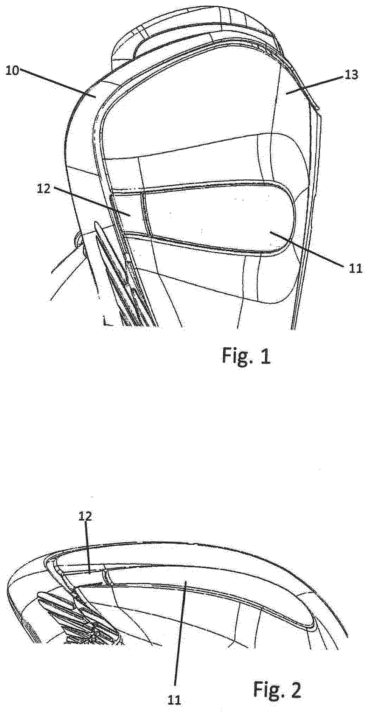

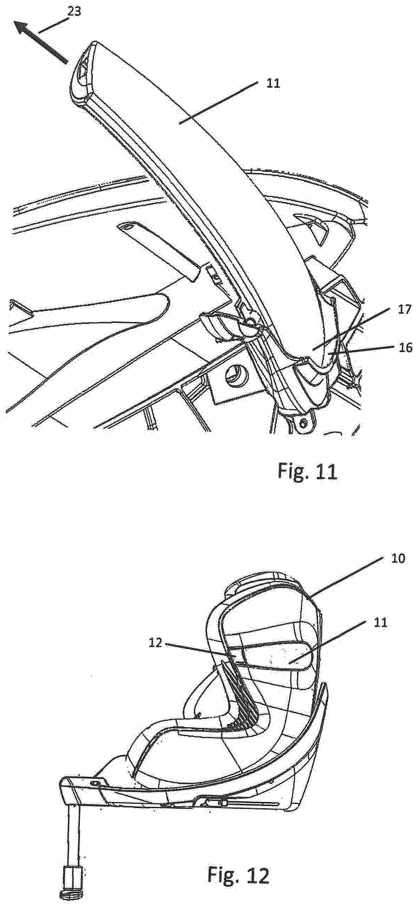

Fig. 1 zeigt eine Seitenansicht eines oberen Abschnittes des erfindungsgemäßen Kindersitzes gemäß Fig. 12. Der Kindersitz umfasst ein Sitzelement 10 (Sitzschale) sowie ein Seitenaufprallschutzelement, nämlich Klappelement 11, und einen Entriegelungsknopf 12. Wie in Figuren 1 und insbesondere 2 erkennbar, ist sowohl das Klappelement 11 als auch der Entriegelungsknopf 12 in eine Außenfläche 13 des Sitzelementes 10 eingebettet, so dass Entriegelungsknopf 12 und Klappelement 11 (siehe Fig. 2) zumindest im Wesentlichen bündig in die angrenzenden Abschnitte der Außenfläche des Sitzelementes 10 übergehen. Weiterhin ist in den Fig. 1 und 2 erkennbar, dass die an Klappelement 11 und Entriegelungsknopf 12 angrenzenden Abschnitte der Außenfläche 13 einen (vergleichsweise flachen) Vorsprung ausbilden. Dadurch wird das Klappelement bereits etwas nach außen verlagert, was den Seitenaufprallschutz verbessert.

Der Entriegelungsknopf 12 ist ausführungsgemäß axial gelagert, kann jedoch auch ein Schiebeknopf sein oder noch anders ausgeführt sein. Vorzugsweise ist der Entriegelungsknopf jedoch als Druckknopf ausgebildet.

Entriegelungsknopf 12 oder Klappelement 11 können auch auf der Außenfläche 13 (beispielsweise von dieser vorstehend) angebracht sein.

In den Fig. 1 und 2 befindet sich das Klappelement 11 in seiner Ruhestellung.

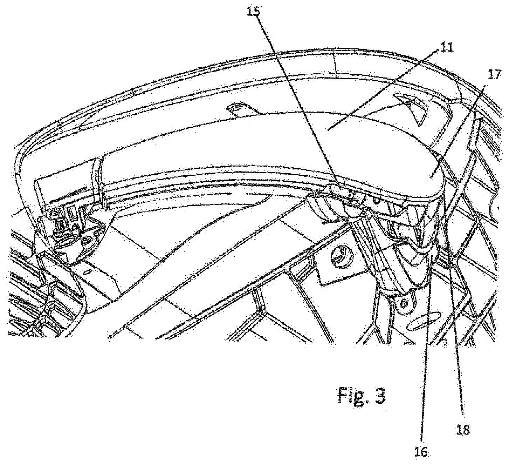

In der Ansicht gemäß Fig. 3, in der teilweise ein Inneres des Kindersitzes einsehbar ist, ist das Klappelement 11 mit weiteren Details gezeigt. Insbesondere ist erkennbar, dass das Klappelement 11 auf einer Achse 14 über ein im Klappelement 11 vorgesehenes Langloch 15 gelagert ist. Dadurch kann das Klappelement 11 einerseits um die Achse 14 rotiert werden und andererseits mit dieser Achse entlang des Langlochs gleiten. Weiterhin kann Fig. 3 eine Aufnahme 16 für ein proximales Ende 17 des Klappelementes 11 entnommen werden. In dieser Aufnahme 16 kann das Klappelement in seiner Funktionsstellung (nicht in Fig. 3 gezeigt) aufgenommen werden. Die Aufnahme 16 (Tasche) ist ausführungsgemäß als separates Teil ausgebildet, kann jedoch auch (direkt) ein Teil des Sitzelementes (der Sitzschale) sein, also einstückig mit der Außenwand des Sitzelementes ausgebildet sein. Wie im Einzelnen weiter unten erläutert, ist eine Zugfeder (nicht in Fig. 3 zu sehen) gezeigt, die eine Kraft bereitstellt, um bei Auslösen des Betätigungsknopfes 12 das Klappelement 11 nach außen zu rotieren, so dass es seine Funktionsstellung einnehmen kann.

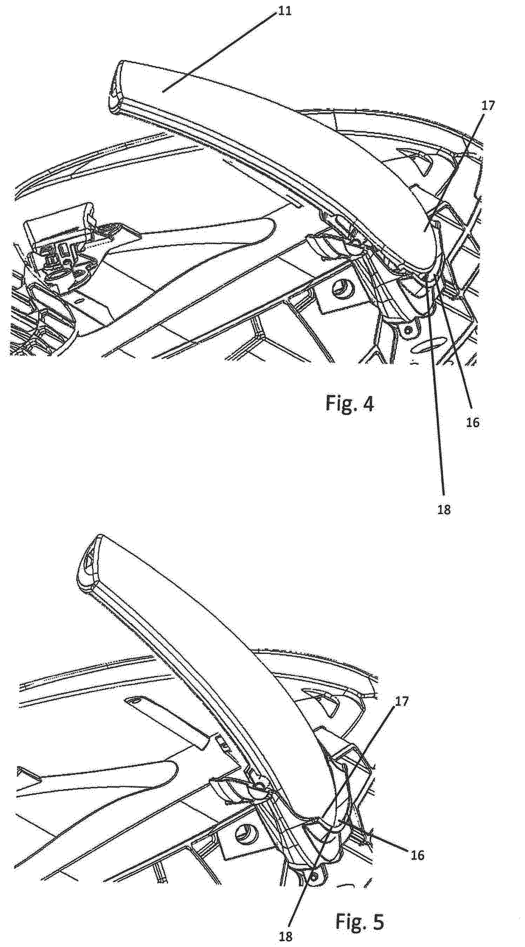

In Fig. 4 ist ein Zustand gezeigt, der eingenommen wird, kurz nachdem der Betätigungsknopf 12 ausgelöst wurde. Es handelt sich hier im Prinzip um eine willkürlich gewählte Zwischenposition, während des Bewegungsablaufs (Rotation) zur Überführung des Klappelements 11 von der Ruhestellung gemäß Fig. 3 in die Funktionsstellung gemäß Fig. 5. Fig. 5 zeigt also die Funktionsstellung, d.h. die Endposition des Klappelementes 11. In dieser Position ist das proximale Ende 17 des Klappelementes 11 in der Aufnahme 16 aufgenommen. Wie in den Fig. 3-5 erkennbar, ist eine Endkante 18 am proximalen Ende 17 des Klappelementes 11 gebogen (konvex) ausgebildet. Analog ist auch die Aufnahme 16 gebogen (konkav) ausgeführt. Das proximale Ende 17 kann dadurch berührend in der Aufnahme 16 gelagert werden. Insgesamt wird ein vorteilhafter Formschluss erreicht (wie nachfolgend im Detail erläutert).

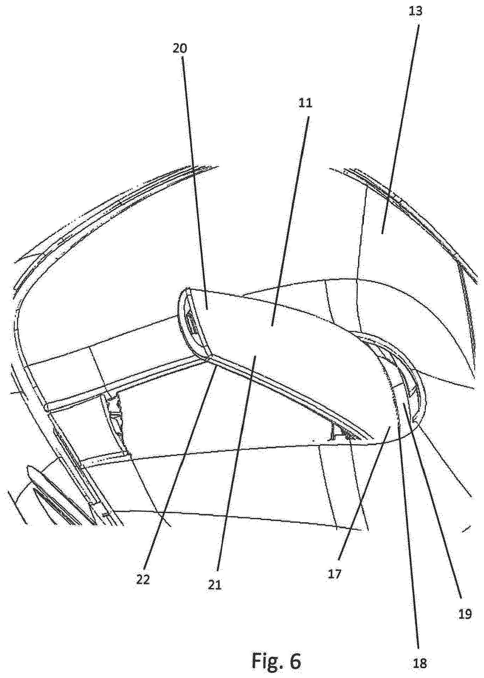

Fig. 6 zeigt einen Abschnitt einer Seitenansicht des Kindersitzes mit herausgeschwenktem Klappelement 11. Erkennbar ist hier, dass das Sitzelement 10 eine Führungsfläche 19 aufweist, entlang der das proximale Ende 17 des Klappelementes 11 während des Herausklappens entlanggleiten kann. Die (hier nicht erkennbare) Feder sorgt dafür, dass das proximale Ende 17 bzw. dessen Endkante 18 an die Führungsfläche 19 gedrückt wird. Auch die Führungsfläche 19 ist (im Querschnitt) konvex ausgebildet, also nach außen gewölbt.

Wie in den Fig. 1-6 erkennbar, ist das Klappelement gebogen ausgeführt und zwar in proximal-distale Richtung, die durch eine Richtung definiert wird, die von dem proximalen Ende 18 zu einem distalen Ende 20 (siehe Fig. 6) verläuft. Dadurch passt sich das Klappelement 11 der Außenwand 13 besonders vorteilhaft an.

In einem Querschnitt, senkrecht auf die proximal-distale Richtung, weist das Klappelement 11 eine flache Oberseite 21 und eine gebogene Unterseite 22 auf, wobei sich "Ober-" darauf bezieht, dass im eingeklappten Zustand diese Fläche von dem Sitzelement 10 weg weist und entsprechend "Unter-" sich darauf bezieht, dass die entsprechende Fläche zu dem Sitzelement im eingeklappten Zustand hin weist. Der Querschnitt des Klappelementes ist in proximal-distaler Richtung etwa halbmondförmig (auch die Oberseite 21 kann also zumindest geringfügig konkav ausgebildet sein).

Insgesamt sorgt die Führungsfläche 19 (siehe Fig. 6) dafür, dass im Zusammenwirken mit der Feder das Klappelement 11 in seine Funktionsstellung rotiert werden kann.

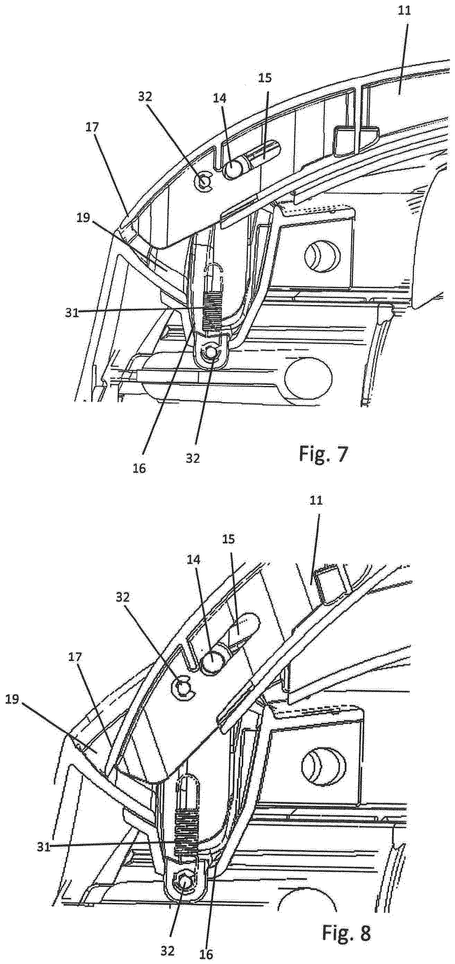

Das Zusammenwirken mit der Feder lässt sich den Fig. 7-11 entnehmen. Fig. 7 zeigt einen Querschnitt eines Abschnitts des Kindersitzes. Das Klappelement 11 befindet sich in seiner Ruhestellung. Wird nun der (nicht in Fig. 7 gezeigte, siehe beispielsweise Fig. 1 und 2) Betätigungsknopf 12 betätigt, wird das (ebenfalls nicht in den Fig. 7 gezeigte) distale Ende (siehe Fig. 6) 20 des Klappelementes 11 frei beweglich, so dass aufgrund der Federkraft eines in Fig. 7 gezeigten Federelementes 31 das proximale Ende 17 des Klappelementes 11 entlang der Aufnahme bzw. Führungsfläche 19 gleitet (dies ist in Fig. 8 gezeigt).

Zum besseren Verständnis sei angemerkt, dass das Federelement 31 zwischen den Aufhängepunkten 32 wirkt bzw. an diesen angreift (die in den Figuren gezeigte Feder also rein schematisch zu verstehen ist).

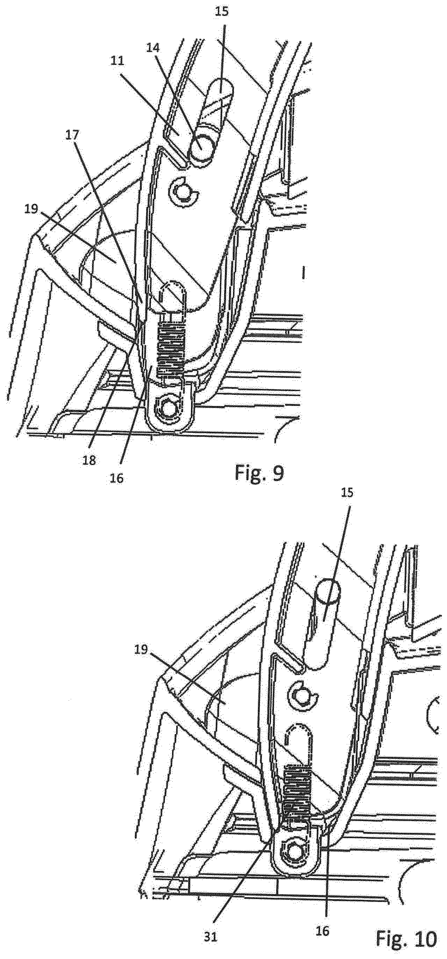

Während des Gleitens des distalen Endes 17 entlang der Führungsfläche 19 rotiert das Klappelement 11 um die Achse 14, bis eine in Fig. 9 gezeigte Zwischenposition erreicht wird. In dieser Zwischenposition ist die distale Endkante 18 in einer Stellung (genau) zwischen Führungsfläche 19 und Aufnahme 16. Wenn (bzw. weil) die Feder 31 nun weiter wirkt, gleitet das distale Ende 17 in die Aufnahme 16, bis es die Endstellung (Funktionsstellung) in Fig. 10 erreicht. Während dieses Hineingleitens in die Aufnahme 16 gleitet die Achse 14 entlang des Langlochs 15. Aus diesem Grund ist das Langloch 15 in proximal-distaler Richtung orientiert.

Fig. 11 zeigt das Klappteil 11 in der Funktionsstellung. Wird das Klappteil 11 in Richtung des Pfeiles 23 gezogen, bewegt sich das proximale Ende 17 aus der Ausnahme 16 (vgl. für den umgekehrten Fall die Fig. 9 und 10), so dass es nach Erreichen der Position gemäß Fig. 9 wieder eingeklappt werden kann und somit in seine Ruheposition verbracht werden kann. Dies erfolgt per Hand, entgegen der Zugkraft der Feder, die also überwunden werden muss.

Um das Klappelement (den Arm) wieder in seine flache (geschlossene) Position zu bringen, kann es ausreichen, dass dieser kurz gezogen bzw. angehoben wird und daraufhin in die Verriegelungslage zurückrotiert werden kann.

Die Aufnahme 16 (Tasche) hat den Vorteil, dass im Falle eines Auffahrunfalls (Aufpralls) das Klappelement 11 sicher abgestützt und gehalten wird, was insgesamt die Seitenaufprallschutzfunktion auf einfache Art und Weise verbessert.

Die vorliegende Beschreibung bezieht sich im Detail auf ein (Englisch: one) seitlich angebrachtes Seitenaufprallschutzelement bzw. Klappelement 11. Vorteilhafterweise sind jedoch an beiden Seiten des Kindersitzes entsprechende Seitenaufprallschutzelemente vorgesehen. Die (abgesehen von einer Spiegelung der jeweiligen Strukturen) identisch ausgebildet sein können. Es wäre auch denkbar, noch mehr als nur zwei Seitenaufprallschutzelemente (wie oben beschrieben) vorzusehen, beispielsweise je zwei auf beiden Seiten.

### Bezugszeichen

- 10: Sitzelement
- 11: Klappelement
- 12: Entriegelungsknopf
- 13: Außenfläche
- 14: Achse
- 15: Langloch
- 16: Aufnahme
- 17: proximales Ende
- 18: Endkante
- 19: Führungsfläche
- 20: distales Ende
- 21: Oberseite
- 22: Unterseite
- 23: Pfeil
- 31: Federelement
- 32: Aufhängepunkt

## Patentansprüche

1. Kindersitz zur Anbringung auf einem Kraftfahrzeugsitz mit einem Sitzelement (10), insbesondere Sitzschale, und einem Seitenaufprallschutz mit einem Klappelement (11), der von einer innerhalb einer vorgegeben Breite, insbesondere Standardbreite, gelegenen Ruhestellung in eine außerhalb der vorgegeben Breite, insbesondere Standardbreite gelegenen, Funktionsstellung und umgekehrt bringbar ist,
**dadurch gekennzeichnet, dass**
der Kindersitz eine Stellungsüberführungseinrichtung aufweist, die derart ausgebildet ist, dass die Stellungsüberführungseinrichtung selbsttätig den Seitenaufprallschutz von seiner Ruhestellung oder einer Zwischenstellung zwischen Ruhe- und Funktionsstellung in seine Funktionsstellung überführt, wobei die Stellungsüberführungseinrichtung mindestens eine Feder (31) umfasst, wobei das Klappelement (11) in der Funktionsstellung so positioniert und gehalten ist, dass durch ein Ziehen am Klappelement, insbesondere an seinem distalen Ende, eine Arretierung in der Funktionsstellung aufgehoben werden kann, so dass eine Überführung in die Ruhestellung möglich ist.

2. Kindersitz nach Anspruch 1,
**dadurch gekennzeichnet, dass**
ein Stützabschnitt einer Außenwand des Sitzelementes so ausgebildet ist, dass das Klappelement (11) zumindest zeitweise während eines Aufklappens und/oder eines Einrastens in die Funktionsstellung von dem Stützabschnitt der Außenwand des Sitzelementes (10) geführt wird und/oder das Klappelement (10) in der Funktionsstellung in dem Stützabschnitt aufgenommen ist.

3. Kindersitz nach Anspruch 1 oder 2,
**dadurch gekennzeichnet, dass**
der Kindersitz eine Betätigungseinrichtung aufweist, die derart mit der Stellungsüberführungseinrichtung zusammenwirken kann, dass, wenn die Betätigungseinrichtung betätigt wird, die Stellungsüberführungseinrichtung selbsttätig den Seitenaufprallschutz von seiner Ruhestellung oder einer Zwischenstellung zwischen seiner Ruhe- und Funktionsstellung in seine Funktionsstellung überführt.

4. Kindersitz nach Anspruch 3,
**dadurch gekennzeichnet, dass**
die Betätigungseinrichtung einen Betätigungsknopf (12), vorzugsweise einen Entriegelungsknopf, insbesondere Druckknopf oder Schiebeknopf, umfasst.

5. Kindersitz nach einem der vorhergehenden Ansprüche,
**dadurch gekennzeichnet, dass**
das Klappelement (11) und/oder die Betätigungseinrichtung in der Ruhestellung in die Außenwand (13) des Sitzelementes (10) eingebettet ist.

6. Kindersitz nach Anspruch 5,
**dadurch gekennzeichnet, dass**
das Klappelement (11) auch in der Funktionsstellung teilweise in der Außenwand des Sitzelementes eingebettet ist, so dass nur ein Abschnitt des Klappelementes (11) über die Außenwand vorragt, wobei das Klappelement in der Funktionsstellung vorzugsweise um mindestens 50%, weiter vorzugsweise um mindesten 70 %, vorzugsweise jedoch höchstens 90 %, vorzugsweise 80% seiner Länge über die Außenwand des Sitzelementes vorragt.

7. Kindersitz nach einem der vorhergehenden Ansprüche,
**dadurch gekennzeichnet, dass**
die Stellungsüberführungseinrichtung mindestens eine Zugfeder umfasst und/oder ein Langloch (15), vorzugsweise im Klappelement (11), zur Aufnahme einer Rotationsachse (14).

8. Kindersitz nach einem der vorhergehenden Ansprüche,
**dadurch gekennzeichnet, dass**
ein proximales Ende (17) des Klappelementes (11) in der Funktionsstellung in einer Aufnahme (16) der Außenwand (13) des Sitzelementes (10) gehalten ist, insbesondere rastend gehalten ist.

9. Kindersitz nach den Ansprüchen 2 und 8,
**dadurch gekennzeichnet, dass**
der Stützabschnitt einen Führungsabschnitt (19) aufweist, der so ausgebildet ist, dass das proximale Ende (17) des Klappelementes (11) zumindest zeitweise während des Ausklappens an dem Führungsabschnitt zwangsgeführt ist.

10. Kindersitz nach einem der vorhergehenden Ansprüche,
**dadurch gekennzeichnet, dass**
eine proximale Endkante (18) des Klappelementes (11) zumindest abschnittsweise konvex ausgebildet ist und der Führungsabschnitt (19) nach Anspruch 9 und/oder die Aufnahme nach Anspruch 8 eine entsprechend konkave Ausformung umfasst/umfassen.

11. Kindersitz nach Anspruch 9 oder 10,
**dadurch gekennzeichnet, dass**
der Halteabschnitt (16) an den Führungsabschnitt angrenzt, wobei der Halteabschnitt vorzugsweise gegenüber dem Führungsabschnitt abgeknickt ist.

12. Kindersitz nach einem der vorhergehenden Ansprüche,
**dadurch gekennzeichnet, dass**
das Klappelement (11) insbesondere in einem Abschnitt der in eine proximal-distale Richtung verläuft, gebogen ausgebildet ist
und/oder in einem Querschnitt senkrecht auf die proximal-distale Richtung, zumindest abschnittsweise bogenförmig ist, insbesondere eine (zumindest im Wesentlichen) flache Oberseite und eine gebogene Unterseite aufweist.

## Claims

1. Child seat for affixing to a motor vehicle seat with a seat element (10), in particular, a seat shell, and a side impact protector with a folding element (11), which can be moved from a resting position lying within a specified width, in particular, a standard width, into a functional position lying outside of the specified width, in particular, a standard width, and vice versa,
**characterized in that**
the child seat has a position transfer device which is designed in such a way that the position transfer device automatically transfers the side impact protector from its resting position or an intermediate position between the resting and functional positions into its functional position, wherein the position transfer device comprises at least one spring (31), wherein the folding element (11) is held and positioned in the functional position in such a way that, by pulling on the folding element, in particular, on its distal end, a locking can be undone in the functional position so that a transfer into the resting position is possible.

2. Child seat according to Claim 1,
**characterized in that**
a support section of an outer wall of the seat element is formed in such a way that the folding element (11) is guided by the support section of the outer wall of the seat element (10) at least temporarily during a folding up and/or a snapping into the functional position, and/or the folding element (10) is accommodated in the support section in the functional position.

3. Child seat according to Claim 1 or 2,
**characterized in that**
the child seat has an actuator which can work together with the position transfer device in such a way that, when the actuator is operated, the position transfer device automatically transfers the side impact protector from its resting position or an intermediate position between its resting and functional position into its functional position.

4. Child seat according to Claim 3,
**characterized in that**
the actuating device comprises an actuator button (12), preferably an unlocking button, in particular, a pushbutton or a slider button.

5. Child seat according to any one of the preceding claims,
**characterized in that**
the folding element (11) and/or the actuator is embedded into the outer wall (13) of the seat element (10) in the resting position.

6. Child seat according to Claim 5,
**characterized in that**
the folding element (11) is also partially embedded in the outer wall of the seat element in the functional position so that only a section of the folding element (11) protrudes over the outer wall, wherein, in the functional position, the folding element preferably protrudes over the outer wall of the seat element by at least 50%, being furthermore preferred by at least 70%, however preferably a maximum of 90%, preferably 80% of its length.

7. Child seat according to any one of the preceding claims,
**characterized in that**
the position transfer device comprises at least one tension spring and/or an oblong hole (15), preferably in the folding element (11), for receiving a rotational axis (14).

8. Child seat according to any one of the preceding claims,
**characterized in that**
a proximal end (17) of the folding element (11) is held in the functional position is held in a receptacle (16) of the outer wall (13) of the seat element (10), in particular, being held in a resting manner.

9. Child seat according to Claims 2 and 8,
**characterized in that**
the support section comprises a guide section (19) which is designed in such a way that the proximal end (17) of the folding element (11) is at least forcibly guided temporarily at the guide section when being folded out.

10. Child seat according to any one of the preceding claims,
**characterized in that**
a proximal end edge (18) of the folding element (11) is convex in shape at least in sections and the guide section (19) according to Claim 9 and/or the receptacle according to Claim 8 comprise(s) a correspondingly concave shape.

11. Child seat according to Claim 9 or 10,
**characterized in that**
the retaining section (16) is adjacent to the guide section, wherein the retaining section is preferably bent towards the guide section.

12. Child seat according to any one of the preceding claims,
**characterized in that**
the folding element (11) is curved, in particular, in a section that runs in a proximal-distal direction and/or is arc-shaped at least in sections in a cross-section perpendicular to the proximal-distal direction, in particular, having a (at least essentially) flat top side and a curved underside.

## Revendications

1. Siège pour enfant, destiné au montage sur un siège de véhicule automobile, pourvu d'un élément d'assise (10), notamment d'une coque d'assise, et d'une protection contre les chocs latéraux dotée d'un élément basculant (11), qui est susceptible d'être amené d'une position de repos située à l'intérieur d'une largeur prédéfinie, notamment d'une largeur standard dans une position fonctionnelle, située à l'extérieur d'une largeur prédéfinie, notamment d'une largeur standard, et inversement,
**caractérisé en ce que**
le siège pour enfant comporte un système de passage de position qui est conçu de telle sorte que le système de passage de position fasse passer la protection contre les chocs latéraux de sa position de repos ou d'une position intermédiaire entre la position de repos et la position fonctionnelle dans sa position fonctionnelle, le système de passage de position comprenant au moins un ressort (31), dans la position fonctionnelle, l'élément basculant (11) étant positionné et maintenu de telle sorte que par une traction exercée sur l'élément basculant, notamment sur son extrémité distale, un blocage dans la position fonctionnelle puisse être annulé, de sorte qu'un passage dans la position de repos soit possible.

2. Siège pour enfant selon la revendication 1,
**caractérisé**
**en ce qu'**un segment d'appui d'une paroi extérieure de l'élément d'assise est conçu de telle sorte qu'au moins temporairement, pendant un rabattement en ouverture et/ou un enclenchement dans la position fonctionnelle, l'élément basculant (11) soit guidé par le segment d'appui de la paroi extérieure de l'élément d'assise (10) et/ou que dans la position fonctionnelle, l'élément basculant (10) soit réceptionné dans le segment d'appui.

3. Siège pour enfant selon la revendication 1 ou 2,
**caractérisé en ce que**
le siège pour enfant comporte un système de manœuvre qui est susceptible de coopérer avec le système de passage de position, de telle sorte que lorsque le système de manœuvre est manœuvré, le système de passage de position fasse passer automatiquement la protection contre les chocs latéraux de sa position de repos ou d'une position intermédiaire entre sa position de repos et sa position fonctionnelle dans sa position fonctionnelle.

4. Siège pour enfant selon la revendication 3,
**caractérisé en ce que**
le système de manœuvre comprend un bouton de manœuvre (12), de préférence un bouton de déverrouillage, notamment un bouton poussoir ou un ou bouton coulissant.

5. Siège pour enfant selon l'une quelconque des revendications précédentes,
**caractérisé en ce que**
dans la position de repos, l'élément basculant (11) et/ou le système de manœuvre est incorporé dans la paroi extérieure (13) de l'élément d'assise (10).

6. Siège pour enfant selon la revendication 5,
**caractérisé**
**en ce qu'**également dans la position fonctionnelle, l'élément basculant (11) est partiellement incorporé dans la paroi extérieure de l'élément d'assise, de telle sorte que seul un segment de l'élément basculant (11) saillisse en avant au-delà de la paroi extérieure, dans la position fonctionnelle, l'élément basculant saillant en avant de préférence d'au moins 50 %, de manière plus préférentielle, d'au moins 70 %, de préférence toutefois d'au plus 90 %, de préférence de 80% de sa longueur au-delà de la paroi extérieure de l'élément d'assise.

7. Siège pour enfant selon l'une quelconque des revendications précédentes,
**caractérisé en ce que**
le système de passage de position comprend au moins un ressort de traction et/ou un trou oblong (15), de préférence dans l'élément basculant (11), destiné à réceptionner un axe de rotation (14).

8. Siège pour enfant selon l'une quelconque des revendications précédentes,
**caractérisé en ce que**
dans la position fonctionnelle, une extrémité proximale (17) de l'élément basculant (11) est maintenue, notamment par enclenchement dans un logement (16) de la paroi extérieure (13) de l'élément d'assise (10) .

9. Siège pour enfant selon les revendications 2 et 8,
**caractérisé en ce que**
le segment d'appui comporte un segment de guidage (19) qui est conçu de telle sorte qu'au moins temporairement pendant le basculement en ouverture, l'extrémité proximale (17) de l'élément basculant (11) subisse un guidage forcé sur le segment de guidage.

10. Siège pour enfant selon l'une quelconque des revendications précédentes,
**caractérisé**
**en ce qu'**une arête d'extrémité (18) proximale de l'élément basculant (11) est conçue au moins par endroits de forme convexe et **en ce que** le segment de guidage (19) selon la revendication 9 et/ou le logement selon la revendication 8 comprend/comprennent une empreinte concave en conséquence.

11. Siège pour enfant selon la revendication 9 ou 10,
**caractérisé en ce que**
le segment de maintien (16) est adjacent au segment de guidage, le segment de maintien étant de préférence coudé par rapport au segment de guidage.

12. Siège pour enfant selon l'une quelconque des revendications précédentes,
**caractérisé en ce que**
notamment dans un segment qui s'écoule dans une direction proximale-distale, l'élément basculant (11) est conçu en étant recourbé,
et/ou dans une section transversale perpendiculaire à la direction proximale-distale, est de forme curviligne au moins par endroits, notamment comporte une face supérieure (au moins sensiblement) plate et une face inférieure recourbée.
